Europäisches Patentamt

(19) European Patent Office

Office européen des brevets

(11) Publication number: **0 206 080 B1**

(12) **EUROPEAN PATENT SPECIFICATION**

(45) Date of publication of patent specification: 04.09.91   (51) Int. Cl.⁵: **B23K 26/12**

(21) Application number: 86107849.1

(22) Date of filing: 09.06.86

(54) Generic shield for metal processing operations.

(30) Priority: 28.06.85 US 750721

(43) Date of publication of application:
30.12.86 Bulletin 86/52

(45) Publication of the grant of the patent:
04.09.91 Bulletin 91/36

(84) Designated Contracting States:
DE FR GB SE

(56) References cited:
DE-A- 3 007 160
GB-A- 2 134 071
US-A- 3 875 364
US-A- 4 078 167

NAVY TECHNICAL DISCLOSURE BULLETIN,
vol. 5, no. 8, August 1980, pages 15-17, Ar-
lington, US; S.M. COPLEY "Vapor removal of
machined material"

PATENT ABSTRACTS OF JAPAN, vol. 6, no.
263 (M-181)[1141], 22nd December 1982; & JP
- A - 57 - 156 888 (TOKYO SHIBAURA DENKI
K.K.) 28-09-1982

(73) Proprietor: WESTINGHOUSE ELECTRIC COR-
PORATION
Westinghouse Building Gateway Center
Pittsburgh Pennsylvania 15222(US)

(72) Inventor: Stol, Israel
639 Rock Springs Road
Pittsburgh Pennsylvania 15228(US)

(74) Representative: Fleuchaus, Leo, Dipl.-Ing. et al
Melchiorstrasse 42
W-8000 München 71(DE)

## Description

This invention relates to a generic shield for use in metal processing. More particularly, this invention is directed to a generic shield which can be used in conjunction with operations utilizing high power density processes such as lasers and out of vacuum electron beams or arc assisted processes such as GMAW, GTAW and plasma welding and/or cladding systems.

In most welding, surfacing and cladding operations which are accomplished by the application of heat and the melting of the alloys involved, it is essential to shield the thermally excited regions with specially formulated gases. In the case of arc processes, proper selection of a shielding gas is made on the basis of the ionization potential of the gas, its density, thermal conductivity and chemical reactivity with the molten and solidified alloys. Controlled introduction of this gas about the welding region, the arc and molten pool, guarantee predictably stable arc behavior, volumetrically sound and dimensionally consistent deposits with proper composition. This minimizes alloy loss through the arc by oxidation. Similarly, many laser assisted welding, surfacing and cladding operations are affected by the quality of the gas shielding. For example, reactive metals such as titanium are often welded in chambers which are first evacuated or purged with inert gas because they become embrittled by reaction with airborne oxygen and nitrogen.

In certain processes the absence of adequate inert gas shielding can cause some of the superheated constituents to react with the oxygen in the air to quickly generate a violent reaction adversely affecting the process. Often this problem is solved by performing the joining process in a closed chamber purged with pure argon. However, the use of a purge chamber becomes impractical in automated processes. This is particularly true when the work cell is of a significant size and purging becomes impractical.

From the NAVY TECHNICAL DISCLOSURE BULLETIN, Vol. 5, No. 8, Aug. 1980, pages 15-17, a device for the removal of laser machined material as well as vapor it is known that reaction products and solvent spray are sucked into a chamber which encircles the lower beam housing and that this vapor material is exhausted through an exhaust duct which opens into the chamber.

The US-A-4 078 167 discloses a welding device capable of preventing weld contamination and capable of providing a stream of suppression gas across the path of a welding beam to suppress the formation of a beam absorbing plasma. The device comprises a housing having a welding beam entrance port, a structure wall cooperating with the housing to form a feed cavity for supplying suppression gas to the feed cavity and for exhausting the suppression gas from the feed cavity. The feed cavity has an exit port aligned with the entrance port, which is fixed to a base cooperating with the housing which comprises a structure wall to form a second cavity within the housing. A nonreactive gas is fed to the second cavity through a perforated filter plate for passing the nonreactive gas from the second cavity to the weld zone.

DE-A-3 007 160 discloses a jet nozzle for supplying inert gas directly to the thermally excited region in order to blow away vapors and gas from the location being processed. Further, a cooling system surrounds the laser system through which water is circulated in order to minimize localized accumulation of heat from the location being processed.

US-A- 3 875 364 discloses a gas-floating device for attachment in tandem relation to a welding tool tip. The attachment device consists of a housing defining an enclosure having gas inlet means remote from the bottom opening.

The housing is filled with a metallic mesh material to diffuse and retard the flow of gas. The open bottom wall of the housing confronts the workpiece and includes a screen member for retaining a steel wool. The leading and trailing edge walls of the housing are each provided with an opening recess dimensioned to direct gas rearwardly and forwardly of the enclosure over the workpiece.

A principal object of invention is to provide a generic shield for joining processes which is particularly well suited and mechanically compatible with an articulated arm of a robot.

With this object in view, the present invention resides in a shielding apparatus for metal processing operations comprising: a housing having an enclosed upper region with a central bore therethrough, which bore defines a chamber for the application of inert gas and metal processing thermal excitation onto a selected location of a workpiece and a smoke removal hood disposed about a perimeter of said chamber and defining a negative pressure region for the removal of smoke and emitted gases resulting from the metal processing operation; characterized by said housing defining at least one gas discharging chamber about said central bore, through which inert gas is introduced to flood an area defined by said gas discharging chamber surrounding the selected location of the workpiece for metal processing; said smoke removal hood disposed about said gas discharging chamber; a skirt comprising a flexible material disposed about the perimeter defined by said gas discharging chamber extending beyond the lower rim of the gas discharging chamber, said skirt physically isolating said gas discharging chamber in which inert gas is introduced from the smoke removal hood and providing a functional chamber over said workpiece; a cooling means disposed in said gas discharging chamber about said central bore; and a plasma suppression nozzle disposed proximate said central bore to provide a high velocity off-axis jet of inert gas to forcibly blow away superheated vapors and gas from the selected location.

The preferred embodiment of the present invention will be described, by way of example, with reference to the accompanying drawings in which:

Figure 1 is an isometric view of an orthogonal axis manipulator system incorporating a laser beam delivery system and the unique generic shielding apparatus of this invention;

Figure 2 is an elevational view through the generic shielding apparatus of this invention;

Figure 3 is a plan view of the generic shielding apparatus of this invention illustrating the individually supplied inert gas chambers of this generic shielding apparatus;

Figure 4 is a schematic representation of the generic shielding apparatus of this invention with the bypass-flow condition of the inert gases about the focal point of the metal processing application; and

Figures 5A, 5B and 5C are schematical representations of the ability of the generic shielding apparatus to accommodate changes in the relative distance and orientation of the shielding apparatus with respect to the substrate or workpiece.

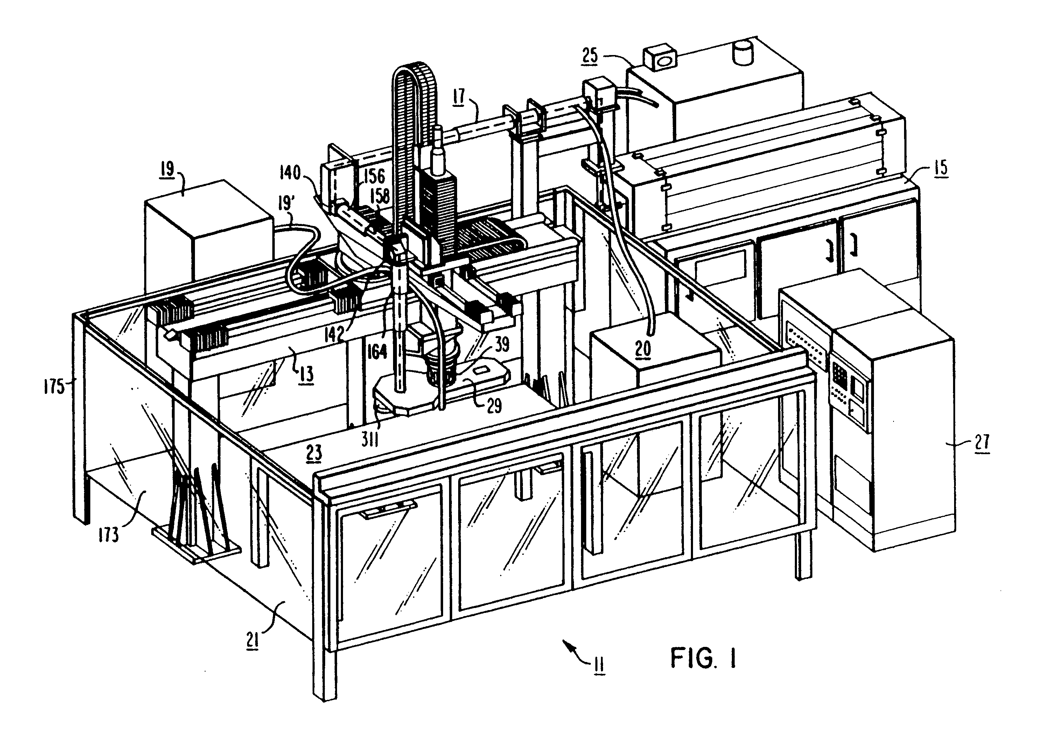

This invention provides a generic shield which can be used in welding, surfacing and cladding operations. These operations can be performed with either high power density processes such as lasers and out of vacuum electron beams or arc assisted processes such as GMAW (MIG), or GTAW (TIG) and plasma welding and/or cladding systems. In Figure 1 the generic shield of this invention is shown in a robotic work cell application in which the metal processing is being affected by a high powered laser.

A complete integrated robot laser work cell 11 is isometrically presented in Figure 1. The robot laser work cell 11 includes an orthogonal axis manipulator system 13 coupled to a laser system 15 by a laser beam delivery system 17. The work cell 11 also includes an exhaust system 19, a safety enclosure means 21 and a precision table 23. A coolant 25 for the optics used in the laser beam delivery system as well as for the generic shield is also provided. Programmable controller by which the orthogonal axis manipulator is directed is shown at 27. The manipulator system 13 is comprised of three orthogonal axis assemblies consisting of an X axis assembly, a Y axis assembly, and a Z axis assembly. A wrist mechanism 39 is mechanically coupled to the Z axis assembly to accommodate the end of arm tooling carousel 29. The end of arm tooling carousel 29 is provided with the optics necessary to perform various metal processing applications which are effected in combination with a laser beam delivery system 17.

The laser beam delivery system used with this robot comprises in its simplest form, a series of joints which are attached to a support member or arm defining one axis of movement of the manipulator system 13. US-A-4 539 462, entitled "robotic laser beam delivery apparatus" by Daniel J. Plankenhorn, and assigned to the assignee of the present invention, and incorporated herein by reference, discloses a light beam directing apparatus which permits a reflected beam of light such as a laser to be directed in a path which comprises a plurality of straight segments. Each segment of the beam is associated with a segment of one of the axes of the robotic apparatus in a fixed spatial relationship.

Although an Everlast EFA 51 $CO_2$ laser manufactured by Coherent, Inc. was used in initial operation of the present invention, any one of a number of lasers can be utilized in this system. Additionally, the work cell shown in Figure 1 utilizes air filtration drying and recirculating system shown at 20. A suitable system is commercially available in Balstrom Filter products "Air Dryer Model 75". The exhaust system 19 includes a conduit system 19' which terminates proximate the laser beam delivery point of the manipulator 13. Due to the generic material processing nature of such a system as described herein, some materials will emit toxic fumes during laser processes. Accordingly, exhaust system 19 provides a pick up nozzle disposed proximate the wrist and directed toward the source of the fumes. Means are provided in association with the pick up nozzle to generate the negative pressure necessary to draw the fumes from the work area for discharge and/or filtration.

The work cell illustrated in Figure 1 includes a plexiglass enclosure surrounding the working area in order to provide a margin of safety during operation. If the plexiglass is hit by a 10.6 micron $CO_2$ laser, for example, smoke is emitted prior to burnthrough and serves to warn any individuals proximate the work cell. Additionally, the plexiglass allows the operator to view the system operation with decreased risk of harm and prevents unauthorized personnel from entering the work envelope. These plexiglass panels 173 are supported by the frame work members 175.

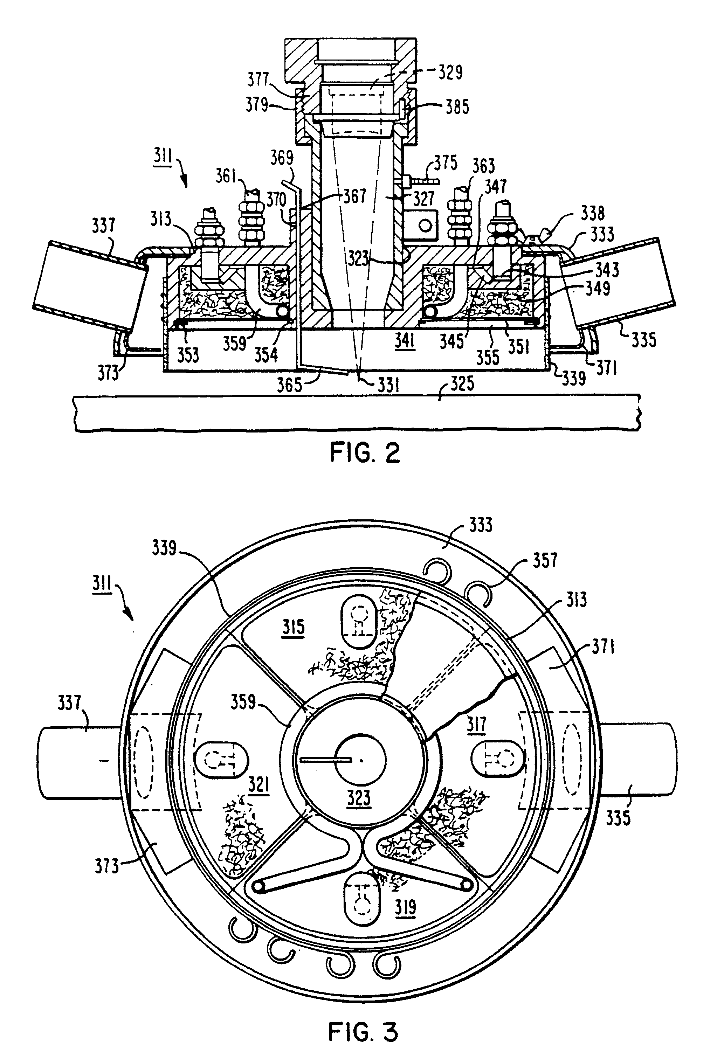

The generic shield apparatus of this invention is mounted on the end of arm tooling carousel 29. Typically the carousel is provided with at least two separate tooling stations. However a number of individual tooling stations can be provided on a carousel limited only by the system application. As will be shown in Figures 2 & 3, the generic shield is an integral part of the laser beam delivery system and serves to support the optics used in one of the tooling stations.

Referring to Figures 2 and 3, the generic shield 311 of this invention has a housing 313 defining a chamber subdivided into quadrants as at 315, 317, 319 and 321. The housing 313 has a centrally disposed bore 323 therethrough which defines a conduit for the application of a source of thermal excitation onto a selected location of a workpiece or substrate as at 325 for metal processing. The bore 323 of the housing has supported therewithin a laser transmitting chamber 327 having the appropriate lenses 329 to effect the desired focal point of the laser beam 331. A smoke removal hood 333 is circumferentially disposed about the housing 313 and is in communication with exhaust duct means 335 and 337 by which a negative pressure zone is created about the outside edge of the housing 313. The hood 333 is removably secured to the housing 313 by means of three wing nuts 338 spaced 120° apart. A skirt 339 is circumferentially disposed about the housing 313 and acts to isolate the inert gas zone 341 below the quadrants of the housing 313. The skirt 339 can consist of either a generally rigid member or it can be a more flexible heat resistant material.

To ensure controlled distribution of the shielding gas, the shield housing 313 is subdivided into the quadrants mentioned above which constitute four independently controlled gas discharging chambers 315, 317, 319 and 321. This arrangement imparts to the shield housing the unique capability of accommodating changes in the shield/substrate distance and the relative orientation between the two.

The inert gas is introduced into the chamber by nozzle 343 which discharges the gas into a deflector 345. The deflector discharges the gas onto the ceiling 347 of the individual quadrant. As a result, the stream of gas coming out of the deflector is broken into a less directional flow of gas. The gas is forced to "flood" the chamber more uniformly as it moves toward the gas diffusers 349 which are preferably comprised of nickel wool. This enhanced "flooding" of the deflected gas helps to prevent the entrapment of air pockets in the chamber and makes the gas flow less turbulent before it reaches the diffusing screens 351. The nickel wool is used as a first stage gas diffuser and functions to break the directionality of the gas flowing through it and reduce its velocity. A stack of filter screens 351 comprises the shield's gas lens. This bank of gas diffusing screens provides a cross-sectionally uniform flow of gas and a laminar-like flow pattern of the outcoming shielding gas toward the substrate 325. There is then a uniform pressure-gradient created across these screens 351. In the preferred embodiment, three to five 200 mesh filter screens define the stack of filter screens 351. The screens can be, for example, stainless steel, copper, or brass. The diffuser screens 351 are replaced periodically because occasional melting by secondary and/or stray laser beams or arcing, spatter and smoke accumulation causes excessive pore clogging. These screens are held within the shield by external and internal rings as at 353 and 354. To support the nickel wool, a perforated filter plate 355 is mounted above the screens. The nickel wool support plate is secured to the shield by flat-headed screws which are threaded into stainless steel sockets. These sockets are forcibly inserted into the shield's structure.

The skirt 339 disposed about the shielding area 341 is held in place by wire clamps 357. Alternatively a large diameter hose clamp can be utilized. To augment the frictional fit between the skirt and the shield's body and to prevent displacement of the wire clamp 357, grooves can be machined in the shield's body where the clamps should press the skirt against it. Preferably, the housing 313 of shield 311 is constructed of a material characterized by high thermal conductivity such as aluminum. Heat dissipation from the shield is facilitated by incorporation of a water cooling loop 359. An inlet 361 and an outlet 363 are provided at the upper portion of the housing body. The tube comprising the loop 359 is made of aluminum which can be brazed, soldered, welded or aluminum plasma sprayed to the shield. The combination of the water cooling loop as well as the use of the aluminum in the construction of the shield minimizes localized accumulation of heat in the shield as well as the adverse effects of inertia due to the lightweight construction.

The shield 311 has been shown in combination with a laser conduit 327. When a laser is being used a preferred feature of this invention is a plasma suppression nozzle 365 which is disposed adjacent the focal point of the laser. The nozzle 365 provides a high velocity off-axis jet of inert gas to forcibly blow away the superheated vapors emitted from the welding region. These vapors, called plasma, tend to optically "decouple" the laser beam from the substrate material being welded. The housing 313 is provided with a bore 367 through which a conduit 369 is disposed. This conduit defines the nozzle 365. The position of the nozzle 365 is adjusted relative to the plasma by means of the set screw 370.

The exhaust ducts or smoke venting ports 335 and 337 used with exhaust hood 333 remove smoke from the hooded area in conjunction with either a vacuum cleaner or a centralized dust removing duct. The smoke removing suction rate is adjusted according to the necessary flow rates of inert gas through the shield, the skirt's end to substrate distance and acceptable shielding levels. Baffles 371 and 373 are placed between the smoke removing hood 333 and the shield body or skirt area 339 and prevent the suction of the shielding gas from the regions adjoining the smoke venting ducts 335 and 337. The baffles 371 and 373 disrupt the suction about these venting ports and distribute the suction action more uniformly about the shield.

A hose fitting 375 is provided in conduit 327 for inletting inert gas into the laser transmitting chamber. This gas flows through the chamber and out the end proximate the suppression nozzle 365 to protect the laser lens from smoke. The prevention of smoke prolongs the life of the lens and provides a more consistently reliable laser performance. The chamber 327 includes a dowel pin 385 which prevents the rotation of the lens holder by tightening upper end of the pin against the lens heat sink 377 by threaded nut 379. To vary the lens to substrate and/or shield to substrate distance, the shield can be made to slide along the lens holder by loosening nut 379 and then locking it into a desired position.

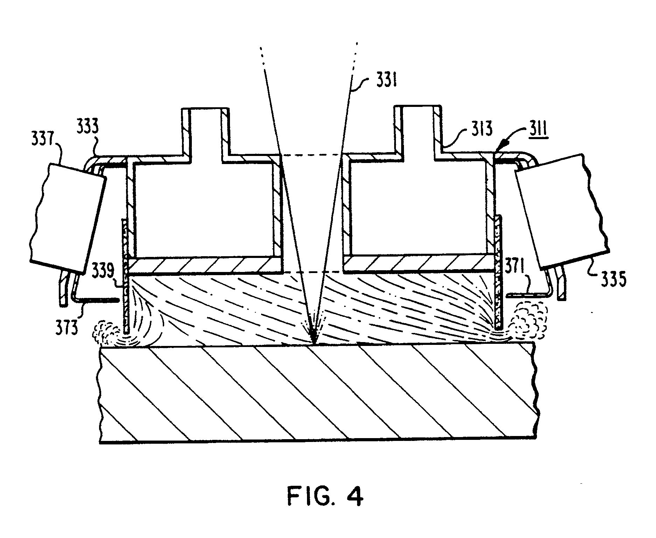

Figure 4 schematically represents the use of this shield to establish a bypass-flow condition about the laser heated region. To insure controlled distribution of the shielding gas, the shield comprises four independently controlled gas discharging chambers or quadrants. This arrangement also gives the shield the unique capability of accommodating to changes in the shield-substrate distance and to changes in the relative orientation of the two to each other. Additionally, the flow direction of the inert gas can be directed as shown in Figure 4. These unique capabilities are effected by regulating the flow rate of the gas through each chamber. This feature of the shield can be used to direct the smoke generated under the shield in a manner that provides optical viewing of the heated region and/or adjacent areas. Thus, in order to have a gas flow direction from left to right as viewed at Figure 4, the flow rate of the inert gas into chamber 1 is greater than the flow rate of gas into chamber 2. Conversely, if a flow direction from right to left were desired, the flow rates described above would be reversed.

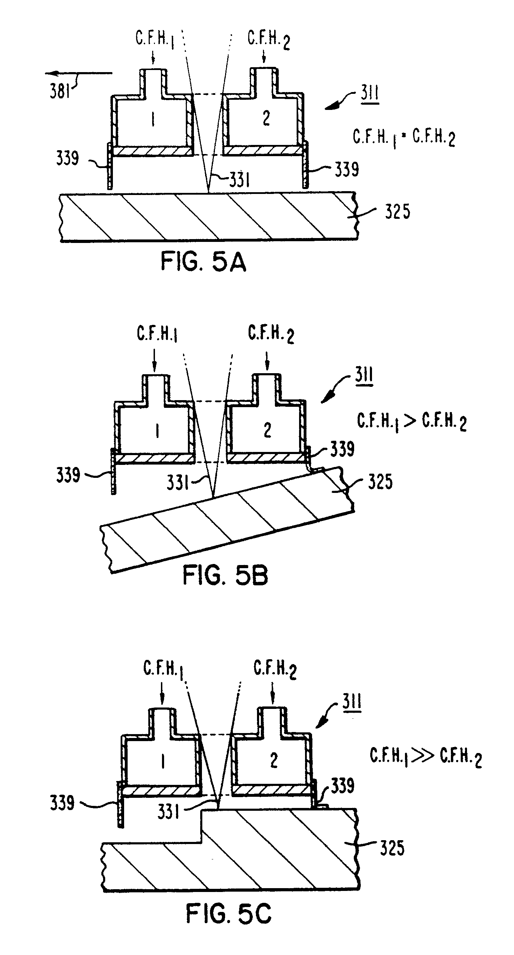

Figures 5A, 5B and 5C schematically represent the shield's ability to accommodate to changes in the relative distance and orientation of the shield with respect to the substrate or workpiece. In Figure 5A, the direction of travel of the shield with respect to the workpiece is indicated by the arrow 381. In 5A, the shield is at a fixed distance from and substantially parallel to the substrate. In this case the flow rate of the inert gas in chambers 1 and 2 would be substantially equal. The exception of course would be when a bypass flow condition is desired as shown in Figure 4. In Figure 5B, the substrate is closer to chamber 2 than to chamber 1. As a result, in order to maintain a relatively constant environment between the generic shield and the substrate, the gas flow rate through chamber 1 must be greater than through chamber 2. The use of a flexible skirt 339 is shown in Figure 5B to aid in accommodating to changes in position and orientation. Finally, Figure 5C illustrates the use of the generic shield 311 on a substrate having an irregular surface. Again the skirt 339 is flexible to accommodate the irregular work surface. The gas flow rate through chamber 1 is substantially greater than the gas flow rate through chamber 2 in order to accommodate the irregular volumetric areas disposed below chamber 1 and the substrate portion and below gas chamber 2 and the substrate area. The shield 311 physically isolates the shielding region from the surrounding environment by putting a skirt around it. Through this technique, the shield provides a functional chamber moving over a substrate.

Thus the invention provides a generic shield usable with most high power density, i.e. laser and arc assisted welding, processes. The shield can be used for a variety of applications such as welding, surfacing and cladding. Due to its superior shielding capabilities, this shield can be used to join and heat treat materials that presently require the employment of costly fixed inert gas chambers. This device is relatively compact and, due to its superior shielding capabilities, it provides significantly lower flow rates of inert gas, thus resulting in substantial savings in metal processing applications. The unique configuration of this shield allows it to accommodate to variations shield/substrate height and shield/substrate orientation. This shield is compatible with industrial manipulators used in automated systems. Finally, the superior shielding capabilities of this device make it useful in joining refractory metals such as titanium, zirconium and tantalum.

## Claims

1. A shielding apparatus (311) for metal processing operations comprising: a housing (313) having an enclosed upper region with a central bore (323) therethrough, which bore defines a chamber (327) for the application of inert gas and metal processing thermal excitation onto a selected location of a workpiece and a smoke removal hood (333) disposed about a perimeter of said chamber (327) and defining a negative pressure region for the removal of smoke and emitted gases resulting from the metal processing operation;

**characterized by**

said housing (313) defining at least one gas discharging chamber (315, 317, 319, 321) about said central bore (323), through which inert gas is introduced to flood an area defined by said gas discharging chamber (315, 317, 319, 321) surrounding the selected location of the workpiece (325) for metal processing;

said smoke removal hood (333) disposed about said gas discharging chamber (315, 317, 319, 321);

a skirt (339) comprising a flexible material disposed about the perimeter defined by said gas discharging chamber (315, 317, 319, 321) extending beyond the lower rim of the gas discharging chamber, said skirt (339) physically isolating said gas discharging chamber (315, 317, 319, 321) in which inert gas is introduced from the smoke removal hood (333) and providing a functional chamber over said workpiece (325);

a cooling means (359, 361, 363) disposed in said gas discharging chamber (315, 317, 319, 321) about said central bore; and

a plasma suppression nozzle (365) disposed proximate said central bore (323) to provide a high velocity off-axis jet of inert gas to forcibly blow away superheated vapors and gas from the selected location.

2. The shielding apparatus for metal processing operations according to claim 1, further characterized by said gas discharging chamber having four chambers (315, 317, 319, 321) into which controlled inert gas streams are introduced.

3. The shielding apparatus for metal processing operations according to claims 1 and 2, further characterized by each gas discharging chamber (315, 317, 319, 321) having filter screen means (351) containing and supporting a metallic wool material (349) whereby a controlled distribution of the shielding gas is effected.

4. The shielding apparatus for metal processing operations according to claim 3, further characterized by said screen means (351) comprising three to five 80 mesh/cm² (200 mesh/inch²) filter screens stacked one on top of another.

5. The shielding apparatus for metal processing operations according to claim 4, further characterized by metallic wool material (349) being selected from the group comprising nickel, wool, copper, brass, stainless steel and aluminium.

6. The shielding apparatus for metal processing operations according to claim 1, further characterized by said inert gas being injected into said gas discharging chamber (315, 317, 319, 321) by a nozzle means (343, 345, 347) which directs the flow of inert gas toward the enclosed upper region of the housing (313) wherein said inert gas is diffused within said discharging chamber (315, 317, 319, 321).

7. The shielding apparatus for metal processing operations according to claim 1, further characterized by said nozzle means (343, 345, 347) in communication with said gas discharging chamber (315, 317, 319, 321) by which inert gas is introduced thereinto and means for controlling the flow of gas into said gas discharging chamber, whereby the direction of gas flow about the selected location can be controlled.

**Revendications**

1. Appareil de protection (311) pour des opérations de traitement de métaux comprenant : une enceinte (313) comportant une région supérieure fermée pourvue d'un trou central (323) qui la traverse, ce trou définissant une chambre (327) pour l'application d'un gaz inerte et pour l'excitation thermique de traitement de métal sur un emplacement sélectionné d'une pièce à usiner et un capot (333) d'élimination de fumée disposé autour du périmètre de ladite chambre (327) et définissant une région de pression négative pour l'élimination des fumées et des gaz émis par l'opération de traitement de métal ;

**caractérisé** par :

ladite enceinte (313) définissant au moins une chambre de décharge de gaz (315, 317, 319, 321) autour du trou central (323), à travers lequel le gaz inerte est introduit pour remplir une zone définie par ladite chambre de décharge de gaz (315, 317, 319, 321) entourant l'emplacement sélectionné de la pièce à usiner (325) pour un traitement de métal ;

ledit capot (333) d'élimination de fumée disposé autour de ladite chambre de décharge de gaz (315, 317, 319, 321) ; une jupe (339) comprenant une matière flexible disposée autour du périmètre défini par ladite chambre de décharge de gaz (315, 317, 319, 321) s'étendant au-delà du bord circulaire inférieur de la chambre de décharge de gaz, ladite jupe (339) isolant physiquement ladite chambre de décharge de gaz (315, 317, 319, 321) dans laquelle le gaz inerte est introduit depuis le capot (333) d'élimination de fumée et constituant une chambre fonctionnelle sur ladite pièce à usiner (325) ;

un moyen de refroidissement (359, 361, 363) disposé dans ladite chambre de décharge de gaz (315, 317, 319, 321) autour dudit trou central ; et

une buse (365) de suppression de plasma disposée à proximité du trou central (323) pour fournir un jet de gaz inerte, désaxé et doué d'une grande vitesse, pour expulser de force de l'emplacement sélectionné les vapeurs et les gaz surchauffés.

2. Appareil de protection pour des opérations de traitement de métaux selon la revendication 1, **caractérisé** en outre par le fait que ladite chambre de décharge de gaz comporte quatre chambres (315, 317, 319, 321) dans lesquelles sont introduits des courants de gaz inerte sous commande.

3. Appareil de protection pour des opérations de traitement de métaux selon les revendication 1 et 2, **caractérisé** en outre par le fait que chaque chambre de décharge de gaz (315, 317, 319, 321) comporte un moyen formant écran de filtrage (351) contenant et supportant une laine métallique (349) grâce à quoi une distribution commandée du gaz de protection est effectuée.

4. Appareil de protection pour des opérations de traitement de métaux selon la revendication 3, **caractérisé** en outre par le fait que le moyen formant écran métallique (351) comprend trois à cinq écrans de filtrage de 80 mesh/cm² (200 mesh/inch²) empilés les uns sur les autres.

5. Appareil de protection pour des opérations de traitement de métaux selon la revendication 4, **caractérisé** en outre par le fait que la laine métallique (349) est choisie parmi le groupe comprenant la laine de nickel, le cuivre, le laiton, l'acier inoxydable et l'aluminium.

6. Appareil de protection pour des opérations de traitement de métaux selon la revendication 1, **caractérisé** en outre par le fait que le gaz inerte est injecté dans la chambre de décharge de gaz (315, 317, 319, 321) par des moyens formant buse (343, 345, 347) qui dirigent le courant de gaz inerte vers la région supérieure fermée de l'enceinte (313) où ledit gaz inerte est diffusé à l'intérieur de la chambre de décharge (315, 317, 319, 321).

7. Appareil de protection pour des opérations de traitement de métaux selon la revendication 1, **caractérisé** en outre par le fait que les moyens formant buse (343, 345, 347) communiquent avec ladite chambre de décharge de gaz (315, 317, 319, 321) et introduisent le gaz inerte dans cette dernière et un moyen commande l'écoulement du gaz dans ladite chambre de décharge de gaz, grâce à quoi la direction du courant de gaz autour de l'emplacement sélectionné peut être commandée.

**Patentansprüche**

1. Abschirmvorrichtung (311) für Metallbearbeitungsvorgänge enthaltend:

Ein Gehäuse (313) mit einem abgeschlossenen oberen Bereich mit einer hindurchgehenden, mittig angeordneten Bohrung (323), wobei diese Bohrung eine Kammer (327) zum Einspeisen von Inertgas und zur Erzeugung von Wärme zwecks Metallbearbeitung auf einer ausgewählte Stelle eines Werkstücks, sowie eine Rauchabzugshaube (333) abgrenzt, die um den Umfang dieser Kammer (327) angeordnet ist und einen Unterdruckbereich zwecks Abziehen des Rauchs und der beim Metallbearbeitungsvorgang freigesetzten Gase abgrenzt; dadurch gekennzeichnet, daß

dieses Gehäuse (313) wenigstens eine Gasausblaskammer (315, 317, 319, 321) um diese mittige Bohrung (323) herum abgrenzt, durch die Inertgas eingeleitet wird, um den durch diese Gasausblaskammer (315, 317, 319, 321) abgegrenzten Bereich um die für die Metallbearbeitung des Werkstücks (325) ausgewählte Stelle herum zu spülen; wobei die Rauchabzugshaube (333) um diese Gasausblaskammer (315, 317, 319, 321) herum angeordnet ist;

ein Schurz (339) bestehend aus einem flexiblen Material um den durch diese Gasausblaskammer (315, 317, 319, 321) definierten Umfang angeordnet ist und sich über den unteren Rand dieser Gasausblaskammer hinaus erstreckt, wobei dieser Schurz (339) über den unteren Rand der Gasausblaskammer (315, 317, 319, 321) hinaus reicht und die Gasausblaskammer (315, 317, 319, 321), in die Inertgas eingeleitet wird, von der Rauchabzugshaube (333) physikalisch isoliert und so eine funktionelle Kammer über diesem Werkstück (325) bildet;

Mittel zum Kühlen (359, 361, 363) in dieser Gasausblaskammer (315, 317, 319, 321) um die mittige Bohrung herum angeordnet sind; und

eine Plasmaunterdrückungsdüse (365) in der Nähe dieser mittigen Bohrung (323) angeordnet ist, um einen achsenentfernten Hochgeschwindigkeits-Inertgasstrahl zu erzeugen, der überhitzte Dämpfe und Gas von der ausgewählten Bearbeitungsstelle wegbläst.

2. Abschirmvorrichtung für Metallbearbeitungsvorgänge gemäß Anspruch 1, ferner dadurch gekennzeichnet, daß diese Gasausblaskammer aus vier Kammern (315, 317, 319, 321) besteht, in welche gesteuerte Inertgasströme eingeleitet werden.

3. Abschirmvorrichtung für Metallbearbeitungsvorgänge gemäß Anspruch 1 und 2, ferner dadurch gekennzeichnet, daß jede dieser Gasausblaskammern (315, 317, 319, 321) mit Filterabschirmmitteln (351) ausgerüstet ist, die ein Metallwolle-Material (349) enthalten und tragen, wodurch eine gesteuerte Verteilung des Schutzgases bewirkt wird.

4. Abschirmvorrichtung für Metallbearbeitungsvorgänge gemäß Anspruch 3, ferner dadurch gekennzeichnet, daß diese Abschirmmittel (315) aus 3 bis 5 übereinanderliegenden 80 mesh/cm² (200 mesh/inch²) Filterabschirmungen bestehen.

5. Abschirmvorrichtung für Metallbearbeitungsvorgänge gemäß Anspruch 4, ferner dadurch gekennzeichnet, daß das Metallwollematerial (349) aus der Gruppe Nickelwolle, Kupfer, Messing, rostfreiem Stahl und Aluminium ausgewählt ist.

6. Abschirmvorrichtung für Metallbearbeitungsvorgänge gemäß Anspruch 1, ferner dadurch gekennzeichnet, daß inertes Gas über ein Düsenmittel (343, 345, 347) in die Gasausblaskammer (315, 317, 319, 321) eingeleitet wird, das den Inertgasstrom in Richtung zum eingeschlossenen oberen Bereich des Gehäuses (313) richtet, in dem dieses Inertgas innerhalb dieser Gasausblaskammer (315, 317, 319, 321) verteilt wird.

7. Abschirmvorrichtung für Metallbearbeitungsvorgänge gemäß Anspruch 1, ferner gekennzeichnet durch diese Düsenmittel (343, 345, 347), die in Verbindung mit dieser Gasausblaskammer (315, 317, 319, 321) stehen und durch die Inertgas in diese eingeleitet wird, sowie durch Mittel zur Steuerung des Gasstroms in die Gasausblaskammer, durch die die Richtung des Gasstroms um die ausgewählte Bearbeitungsstelle herum gesteuert werden kann.

FIG. I

EP 0 206 080 B1

FIG. 2

FIG. 3

FIG. 4

C.F.H.$_1$    C.F.H.$_2$

381

311

C.F.H.$_1$ ⋅ C.F.H.$_2$

339    339

331

325

**FIG. 5A**

C.F.H.$_1$    C.F.H.$_2$

311

C.F.H.$_1$ > C.F.H.$_2$

339

339

331

325

**FIG. 5B**

C.F.H.$_1$    C.F.H.$_2$

311

C.F.H.$_1$ ≫ C.F.H.$_2$

339

339

331

325

**FIG. 5C**